(19)

Europäisches
Patentamt
European
Patent Office
Office européen
des brevets

(11)     EP 2 735 768 B1

(12)     **EUROPÄISCHE PATENTSCHRIFT**

(45) Veröffentlichungstag und Bekanntmachung des
Hinweises auf die Patenterteilung:
**07.01.2015   Patentblatt 2015/02**

(51) Int Cl.:
***F16H 1/28*** (2006.01)         ***F16H 35/02*** (2006.01)

(21) Anmeldenummer: **12007974.4**

(22) Anmeldetag: **27.11.2012**

(54) **Untersetzungsgetriebe mit hohem Untersetzungsverhältnis**

Reduction gear unit with high reduction ratio

Démultiplicateur avec rapport de réduction élevé

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(43) Veröffentlichungstag der Anmeldung:
**28.05.2014   Patentblatt 2014/22**

(73) Patentinhaber: **Maxon Motor AG
6072 Sachseln (CH)**

(72) Erfinder:
 • **Lukic, Darko
   79108 Freiburg (DE)**

 • **Gieb, Karl-Heinz
   79106 Freiburg (DE)**

(74) Vertreter: **Grünecker, Kinkeldey,
Stockmair & Schwanhäusser
Anwaltssozietät
Leopoldstrasse 4
80802 München (DE)**

(56) Entgegenhaltungen:
**WO-A1-02/090149        DE-A1- 10 261 669
DE-A1-102009 006 044**

EP 2 735 768 B1

## Beschreibung

Die vorliegende Erfindung betrifft ein Untersetzungsgetriebe mit hohem Untersetzungsverhältnis nach dem Oberbegriff des unabhängigen Anspruchs 1. Ein derartiges Getriebe umfasst ein Hohlrad, zumindest ein in dem Hohlrad abrollendes Planetenrad mit einer Planetenradachse, und einen Abtrieb, der koaxial zum Hohlrad drehbar gelagert ist. Das Planetenrad umfasst ein von der Planetenradachse beabstandetes Führungselement, das beim Abrollen des Planetenrads gegenüber dem Hohlrad eine Hypozykloide beschreibt, wobei zwischen dem Führungselement und einer Kurvenscheibe des Abtriebs eine Führung besteht, so dass der Abtrieb durch das Abrollen des Planetenrads eine Antriebsbewegung erfährt.

Ein bekanntes Untersetzungsgetriebe mit hohem Untersetzungsverhältnis ist das Planetengetriebe. Ein Planetengetriebe verfügt im Allgemeinen über mehrere Planetenräder, die sowohl mit dem äußeren Hohlrad als auch mit einem inneren Sonnenrad des Planetengetriebes kämmen. Die Planetenräder sind in aller Regel in einem Planetenträger drehbar gelagert. Der Planetenträger selbst ist koaxial zu Hohlrad und Sonnenrad ausgerichtet und ebenfalls drehbar gelagert. Ein Planetengetriebe bietet grundsätzlich die Möglichkeit, entweder das Hohlrad oder den Planetenträger oder aber das Sonnenrad festzuhalten, wobei die beiden anderen Bauteile Antrieb und Abtrieb des Getriebes bilden. Üblich ist es, das Hohlrad als feststehendes System zu verwenden und das Sonnenrad mit der Antriebswelle zu verbinden. Der Planetenträger bildet in diesem Fall den Abtrieb des Planetengetriebes.

Hohe Untersetzungsverhältnisse lassen sich bereits mit einem herkömmlichen Planentengetriebe realisieren, insbesondere wenn das Planetengetriebe über mehrere Stufen verfügt. Sofern das Planetengetriebe mehrstufig ausgeführt ist, wird allerdings in axialer Richtung mehr Bauraum benötigt. Einige Anwendungen verlangen jedoch nach hoch untersetzenden Getrieben, die zwar in radialer Richtung etwas mehr Bauraum in Anspruch nehmen können, in axialer Richtung aber äußerst kurz sein müssen. Es sind bereits mehrere Getriebetypen bekannt, die in solchen Fällen Einsatz finden und in der Regel einstufig ausgeführt werden. Zu diesen Getriebetypen zählt beispielsweise das sogenannte Gleitkeilgetriebe, auch bekannt als "Harmonic Drive". Ein derartiges Getriebe ist aus DE 10 2008 061672 A1 bekannt. Ein Gleitkeilgetriebe besteht aus drei Elementen, nämlich einer elliptischen Antriebsscheibe, dem sogenannten Wave Generator, einer elastischen Übertragungshülse mit Außenverzahnung, dem sogenannten Flex Spline, und einem starren zylindrischen Außenring mit Innenverzahnung, dem sogenannten Circular Spline. Alle drei Bauteile sind konzentrisch zueinander angeordnet. Die elastische Übertragungshülse passt sich stets der Außenkontur der elliptischen Antriebsscheibe an. Eine Drehung der Antriebsscheibe bewirkt daher eine fortlaufende Umformung der elastischen Übertragungshülse. Die elliptische Form führt dazu, dass die Außenverzahnung der elastischen Übertragungshülse lediglich an zwei gegenüberliegenden Abschnitten mit der Innenverzahnung des starren zylindrischen Außenrings in Eingriff steht. Durch eine Drehung der elliptischen Antriebsscheibe findet eine umlaufende Verlagerung des Eingriffs zwischen der Innenverzahnung der elastischen Übertragungshülse und der Außenverzahnung des starren zylindrischen Außenrings statt. Die Untersetzung kommt dadurch zustande, dass die Außenverzahnung der elastischen Übertragungshülse weniger Zähne aufweist als die Innenverzahnung des Außenrings. Gleitkeilgetriebe sind als robust und zuverlässig bekannt. Allerdings erfordert die elastische Übertragungshülse den Einsatz spezieller verschleißfester Materialien, was die Herstellung solcher Getriebe relativ teuer macht. Zudem führt die ständige Umformung der elastischen Übertragungshülse zu einer verlustbehafteten Übertragung.

Ein weiterer Getriebetyp mit hohem Untersetzungsverhältnis ist das Zykloidgetriebe, auch "Exzentergetriebe" genannt. Ein derartiges Getriebe ist beispielsweise aus DE 10 2004 048197 A1 bekannt. Bei diesem Getriebetyp treibt ein Exzenter eine Kurvenscheibe an, die am Außenumfang eine gewisse Anzahl an Kurvenabschnitten aufweist. Die Kurvenscheibe wälzt sich in einem feststehenden Bolzenring ab. Die Anzahl der Bolzen übersteigt die Anzahl der Kurvenabschnitte genau um einen Bolzen. Je Umdrehung des Antriebsrades bewegt sich der Abtrieb einen Kurvenabschnitt weiter. Auch Zykloidgetriebe sind äußerst robust und langlebig. Durch die Taumelbewegung der Kurvenscheibe kommt es mitunter jedoch zu Vibrationen, die sich insbesondere negativ auf den Wirkungsgrad des Getriebes auswirken können. Zykloidgetriebe sind auch relativ teuer in der Herstellung.

Als weiteren Getriebetyp mit hohem Untersetzungsverhältnis wäre noch das Wolfromgetriebe zu nennen. Bei diesem Getriebetyp handelt es sich um eine spezielle Form des herkömmlichen Planetengetriebes. Ein Wolfromgetriebe ist beispielsweise aus DE 10 2010 012879 A1 bekannt.

Alle vorgenannten Getriebetypen haben den Nachteil, dass im Speziellen bei sehr hohen Untersetzungsverhältnissen kein optimaler Wirkungsgrad erreicht werden kann. Zudem sind die vorgenannten Untersetzungsgetriebe relativ teuer in der Herstellung.

Ein Untersetzungsgetriebe nach dem Oberbegriff des unabhängigen Anspruchs 1 ist beispielsweise aus WO 02/090149 A1 bekannt.

Aufgabe der vorliegenden Erfindung ist es, ein Untersetzungsgetriebe anzugeben, das bei einstufiger Bauart sehr große Untersetzungen erlaubt und bei vergleichbarem Bauvolumen gleichzeitig einen höheren Wirkungsgrad aufweist, als die bekannten Untersetzungsgetriebe aus dem Stand der Technik. Das Untersetzungsgetriebe soll sich ferner einfach und kostengünstig herstellen lassen.

Die Aufgabe wird gelöst durch die Merkmale des unabhängigen Anspruchs 1. Demnach liegt bei einem gattungsgemäßen Untersetzungsgetriebe dann eine erfindungsgemäße Lösung der Aufgabe vor, wenn der Kurvenzug der Kurvenscheibe eine geschlossene Hypozykloide oder die Hüllkurve einer geschlossenen Hypozykloide ist, welche durch die Bewegung des Führungselements bei einem anderen als dem tatsächlichen Verhältnis des wirksamen Radius des Hohlrads zum wirksamen Radius des Planetenrads beschrieben wird.

Das erfindungsgemäße Untersetzungsgetriebe erlaubt selbst bei einstufiger Bauweise sehr große Untersetzungen von bis zu 6000:1. Dabei lassen sich höhere Wirkungsgrade erzielen als mit den bekannten hoch untersetzenden Untersetzungsgetrieben. Das erfindungsgemäße Untersetzungsgetriebe bietet ferner den Vorteil, dass es äußerst kurz baut und besonders einfach aufgebaut ist. Es kann sehr einfach und kostengünstig hergestellt werden.

Vorzugsweise unterscheidet sich die Hypozykloide der Kurvenscheibe nur geringfügig von der Hypozykloiden, welche die Bahn des Führungselements beschreibt. Dadurch werden die Kurvenscheibe, und mit ihr der Abtrieb des Getriebes, nur sehr langsam weitergedreht. Das Führungselement ist im Vergleich zu den sonstigen Abmessungen der Getriebebauteile vorzugsweise nahezu punktförmig ausgeführt. Es wird jedoch darauf hingewiesen, dass es sich bei dem Kurvenzug der Kurvenscheibe aufgrund der notwendigen endlichen Ausdehnung des Führungselements niemals um eine exakte Hypozykloide handeln kann. Vielmehr handelt es sich um einen Kurvenzug oder um die Hüllkurve eines Kurvenzugs, der in einem gewissen Abstand zur exakten Hypozykloidenbahn verläuft. Handelt es sich bei dem Führungselement beispielsweise um einen zylindrischen Bolzen, so ist dieser Abstand gleichbleibend und entspricht dem Radius des Bolzens.

Die Erfindung wird durch die folgenden vorteilhaften Ausgestaltungen näher erläutert. Diese sind Gegenstand der Unteransprüche.

Es kann vorgesehen sein, dass dem Kurvenzug eine periodisch wiederkehrende Abweichung überlagert ist. Dadurch können bei gleichförmiger Antriebsgeschwindigkeit mit dem erfindungsgemäßen Untersetzungsgetriebe auch ungleichförmige Abtriebsgeschwindigkeiten realisiert werden. Durch entsprechende Ausgestaltung der Kurvenscheibe lassen sich somit beliebige periodisch wiederkehrende Zeit-Drehgeschwindigkeitsfunktionen abbilden.

In einer weiteren besonders bevorzugten Ausführungsform der vorliegenden Erfindung ist das Führungselement zwischen der Planetenradachse und dem Rollkreis des Planetenrads angeordnet. Die Bahn, die das Führungselement beim Abrollen des Planetenrads beschreibt, entspricht bei dieser Ausführungsform einer verkürzten Hypozykloide, auch "Hypotrochoide" genannt. Das erfindungsgemäße Untersetzungsgetriebe baut in dieser Ausführungsform sehr kompakt. Zudem gewährleistet die Form der Kurvenscheibe bei dieser Ausführungsform eine gleichmäßige Antriebsbewegung des Abtriebs. Es wird darauf hingewiesen, dass das Führungselement rein theoretisch auch in einem Abstand zur Planetenradachse angeordnet werden kann, der größer ist als der wirksame Radius des Planetenrads. In diesem Fall beschreibt das Führungselement eine verlängerte Hypozykloide. Diese Ausführung eignet sich beispielsweise, falls eine ungleichförmige Drehbewegung des Abtriebs oder sogar abwechselnde Vorwärts- und Rückwärtsbewegungen erwünscht sind.

In einer weiteren besonders bevorzugten Ausführungsform der vorliegenden Erfindung handelt es sich bei dem Führungselement um einen Bolzen, der parallel zur Planetenradachse ausgerichtet ist und eine Führung entlang des Kurvenzugs der Kurvenscheibe erfährt. Dadurch werden ein einfacher Aufbau des erfindungsgemäßen Untersetzungsgetriebes sowie eine einfache und kostengünstige Herstellung gewährleistet. Besonders vorteilhaft ist es, wenn der Bolzen drehbar an dem Planetenrad gelagert ist und entlang des Kurvenzugs der Kurvenscheibe abwälzt. Bei dieser Ausführungsform ergeben sich sehr geringe Reibungsverluste. Der Wirkungsgrad des erfindungsgemäßen Untersetzungsgetriebes ist daher sehr hoch. Vorzugsweise ist der Bolzen mittels eines Wälzlagers drehbar am Planetenrad gelagert. Ganz besonders bevorzugt eignet sich hierfür ein Nadellager. Alternativ kann der Bolzen auch fest mit dem Planetenrad verbunden sein, in diesem Fall ist es von Vorteil, wenn eine Hülse, die entlang des Kurvenzugs der Kurvenscheibe abwälzt, drehbar auf dem Bolzen gelagert ist. Sofern der Bolzen selbst drehbar an dem Planetenrad gelagert ist, kann dieser vorteilhaft aus Keramik gefertigt sein. Dadurch verringern sich sowohl der Verschleiß als auch die Reibungsverluste. Das Untersetzungsgetriebe ist dadurch sehr langlebig, zuverlässig und gleichzeitig effizient. Von besonderem Vorteil ist es, wenn der Bolzen aus Zirkoniumoxid gefertigt ist. Alternativ kann der Bolzen vorteilhafterweise auch aus Hartmetall gefertigt sein.

In einer weiteren, besonders bevorzugten Ausführungsform der vorliegenden Erfindung umfasst das Untersetzungsgetriebe genau drei Planetenräder. Vorzugsweise sind die Planetenräder gleichmäßig über den Umfang des Getriebes bzw. über den Umfang des Hohlrads verteilt. Dadurch ergibt sich ein besonders ruhiger Lauf des erfindungsgemäßen Untersetzungsgetriebes. Es wird darauf hingewiesen, dass grundsätzlich auch mehr Planetenräder vorgesehen sein können.

Die Führung zwischen dem Führungselement und der Kurvenscheibe kann verbessert werden, wenn jedes Planetenrad jeweils zwei Führungselemente umfasst, die bezüglich der Planetenradachse um 180° versetzt zueinander im gleichen Abstand von der Planetenradachse angeordnet sind. Dabei ist es durchaus möglich, dass nicht immer beide Führungselemente eines Planetenrads gleichzeitig in Eingriff mit der Kurvenscheibe stehen. Zumindest eines der beiden Führungselemente ist jedoch stets in Kontakt mit dem Kurvenzug der Kurvenscheibe. Die Ausführung mit zwei gegenüberliegenden Führungselementen eignet sich insbesondere, wenn die Kurvenscheibe eine mittlere Ausnehmung aufweist, die durch den Kurvenzug begrenzt ist. Besonders bevorzugt handelt es sich bei dem Kurvenzug dabei um die Hüllkurve einer geschlossenen, sich selbst überlagernden Hypotrochoide.

In einer weiteren besonders bevorzugten Ausführungsform der vorliegenden Erfindung begrenzt der Kurvenzug der Kurvenscheibe eine mittlere Ausnehmung der Kurvenscheibe. Die Kurvenscheibe ist dadurch sehr einfach aufgebaut und lässt sich kostengünstig fertigen. Alternativ dazu kann der Kurvenzug beispielsweise durch eine Nut in der Kurvenscheibe gebildet sein.

Der Antrieb des erfindungsgemäßen Untersetzungsgetriebes kann auf mehrere Wege realisiert werden. In einer besonders bevorzugten Ausführungsform der vorliegenden Erfindung umfasst das Untersetzungsgetriebe ein mit dem Planetenrad kämmendes Sonnenrad, das zum Antrieb des Planetenrads dient. Das Planetenrad, bzw. die Planetenräder ist bzw. sind dabei schwimmend zwischen Sonnenrad und Hohlrad gelagert. Zusätzlich kann selbstverständlich auch ein Planetenträger vorgesehen sein. Bei dieser Ausführungsform wird durch den Eingriff zwischen Sonnenrad und Planetenrädern quasi eine Planetenstufe innerhalb des erfindungsgemäßen Untersetzungsgetriebes realisiert. Durch diese zusätzliche Planetenstufe kann ein besonders hohes Untersetzungsverhältnis erzielt werden. Alternativ dazu kann der Antrieb des Planetenrads über einen Planetenträger erfolgen, der koaxial zum Hohlrad drehbar gelagert ist. Bei dieser Lösung entfällt die zusätzliche Untersetzung über die Planetenstufe. Der Wirkungsgrad des Untersetzungsgetriebes ist in dieser Ausführungsform jedoch besonders hoch. Nur ergänzend sei angemerkt, dass rein theoretisch auch das Hohlrad als Antrieb dienen kann. Auch kann das Planetenrad direkt angetrieben werden.

Das erfindungsgemäße Untersetzungsgetriebe erlaubt bereits bei einstufiger Bauweise ohne zusätzliche Planetenstufe sehr hohe Untersetzungsverhältnisse im Bereich zwischen 5:1 und 500:1. Selbstverständlich kann das erfindungsgemäße Untersetzungsgetriebe auch mehrstufig ausgeführt werden.

Die Erfindung wird im Folgenden anhand von Zeichnungen näher erläutert. Es zeigen:

Fig. 1 eine Anordnung, bestehend aus einem Hohlrad, einem Sonnenrad und einem Planetenrad, zur Erzeugung einer Hypozykloide,

Fig. 2 die Anordnung aus Fig. 1 in leicht abgewandelter Form zur Erzeugung einer verkürzten Hypozykloide,

Fig. 3 ein erstes Ausführungsbeispiel eines erfindungsgemäßen Untersetzungsgetriebes,

Fig. 4 eine Abwandlung des erfindungsgemäßen Untersetzungsgetriebes aus Fig. 3,

Fig. 5 eine weitere Abwandlung des erfindungsgemäßen Untersetzungsgetriebes aus Fig. 3,

Fig. 6 eine Anordnung, bestehend aus einem Hohlrad, einem Sonnenrad und einem Planetenrad, zur Erzeugung einer geschlossenen, sich selbst überlagernden, verkürzten Hypozykloide,

Fig. 7 die Kurvenscheibe eines erfindungsgemäßen Untersetzungsgetriebes gemäß eines weiteren Ausführungsbeispiels,

Fig. 8 ein erfindungsgemäßes Untersetzungsgetriebe mit der Kurvenscheibe aus Fig. 7, und

Fig. 9 das erfindungsgemäße Untersetzungsgetriebe aus Fig. 8 in abgewandelter Form.

Für die folgenden Ausführungen gilt, dass gleiche Teile durch gleiche Bezugszeichen bezeichnet sind. Sofern in einer Zeichnung Bezugszeichen enthalten sind, auf die in der zugehörigen Figurenbeschreibung nicht eingegangen wird, so wird auf vorangehende oder nachfolgende Figurenbeschreibungen Bezug genommen.

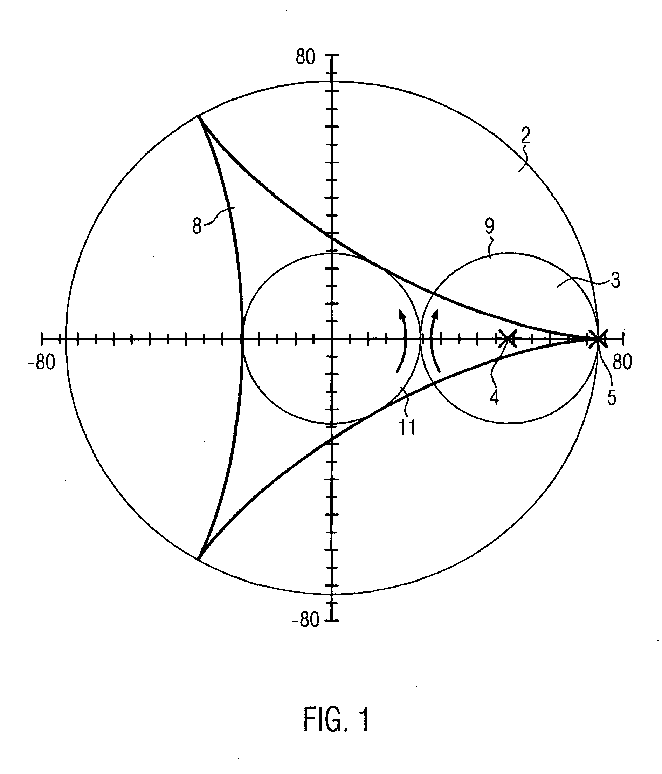

Fig. 1 zeigt eine Anordnung, bestehend aus einem Hohlrad 2, einem Sonnenrad 11 und einem Planetenrad 3. Das Hohlrad 2 bildet das feststehende System, das Sonnenrad 11 ist konzentrisch zum Hohlrad 2 angeordnet und gegenüber dem Hohlrad drehbar gelagert. Die gemeinsame Achse befindet sich im Ursprung des dargestellten Koordinatensystems. Das Planetenrad 3 kämmt sowohl mit dem Sonnenrad als auch mit dem Hohlrad. Üblicherweise verfügen alle drei Räder über eine Verzahnung, die in der Darstellung nicht gezeigt ist. Der Rollkreis 9 des Planetenrads 3 berührt den Rollkreis des Hohlrads und den Rollkreis des Sonnenrads. Die Achse des Planetenrads 3 ist mit dem Bezugszeichen 4 bezeichnet. Wird das Sonnenrad 11 angetrieben, so rollt das Planetenrad 3 am Innenumfang des Hohlrads 2 ab. Der Punkt 5 auf dem Rollkreis 9 des Planetenrads 3, der in der Ausgangsposition den Rollkreis des Hohlrads berührt, beschreibt dabei die geschlossene Hypozykloide 8. Die Parameterdarstellung dieser Hypozykloide 8 kann mit den folgenden beiden Formeln beschrieben werden:

$$x(\alpha) = (R - r) \cdot \cos\left(\frac{r}{R}\alpha\right) + r \cdot \cos\left(\left(1 - \frac{r}{R}\right) \cdot \alpha\right)$$

$$y(\alpha) = (R - r) \cdot \sin\left(\frac{r}{R}\alpha\right) - r \cdot \sin\left(\left(1 - \frac{r}{R}\right) \cdot \alpha\right)$$

mit:

R = Radius des feststehenden Hohlrads 2
r = Radius des Planetenrads 3
$\alpha$ = Drehwinkel.

Sofern das Verhältnis R/r = m ganzzahlig ist, besteht die Hypozykloide aus m zusammenhängenden Bögen. Ist das Verhältnis nicht ganzzahlig, so überlagern sich die Bögen. Wenn das Verhältnis rational ist, schließt die Kurve nach einer gewissen Anzahl von Umdrehungen in sich. Bei einem Planetengetriebe kann das Verhältnis der Radien durch die Zähnezahlen der Räder ersetzt werden. In diesem Fall ist das Verhältnis R/r stets rational. Im in Fig. 1 dargestellten Fall beträgt das Verhältnis m = R/r = 72/24.

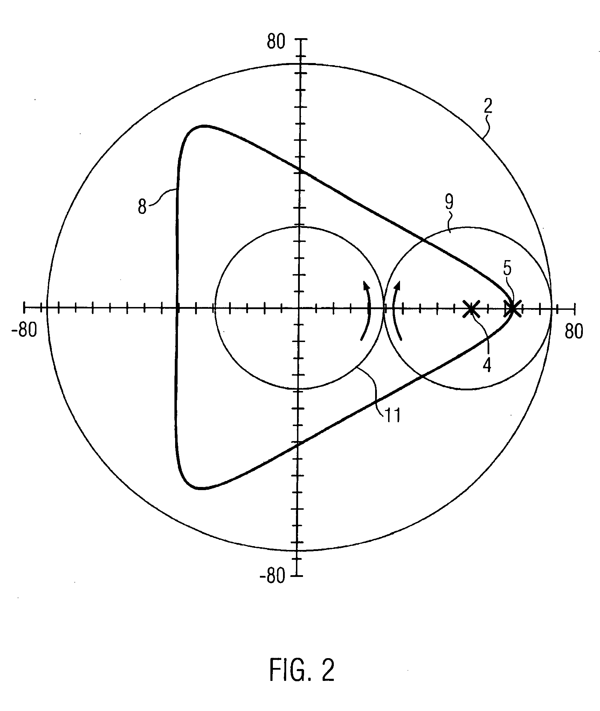

Liegt der Punkt, dessen Bahn betrachtet wird, nicht auf dem Rollkreis 9 des Planetenrads, sondern innerhalb oder außerhalb, so entsteht eine verkürzte bzw. verlängerte Hypozykloide. Verkürzte und verlängerte Hypozykloiden werden auch als "Hypotrochoiden" bezeichnet. Die Anordnung in Fig. 2 entspricht der Anordnung aus Fig. 1. Fig. 2 zeigt allerdings die Bahn eines Punktes 5, der innerhalb des Rollkreises 9 des Planetenrads 3 liegt. Im dargestellten Fall beträgt der Abstand des Punktes 5 von der Planetenradachse 4 13 Einheiten. Demzufolge beschreibt dieser Punkt eine verkürzte Hypozykloide 8. Die Parameterdarstellung dieser Hypozykloide lautet:

$$x(\alpha) = (R - r) \cdot \cos\left(\frac{r}{R}\alpha\right) + c \cdot \cos\left(\left(1 - \frac{r}{R}\right) \cdot \alpha\right)$$

$$y(\alpha) = (R - r) \cdot \sin\left(\frac{r}{R}\alpha\right) - c \cdot \sin\left(\left(1 - \frac{r}{R}\right) \cdot \alpha\right)$$

mit:

c = Abstand des Punktes 5 von der Planetenradachse 4.

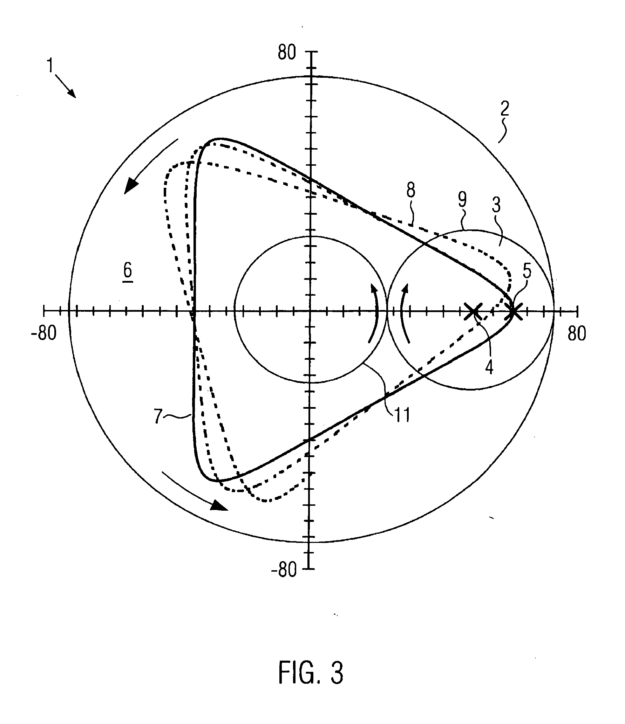

Fig. 3 zeigt ein erstes Ausführungsbeispiel eines erfindungsgemäßen Untersetzungsgetriebes 1. Das Untersetzungsgetriebe umfasst eine Anordnung, wie sie in den Fig. 1 und 2 gezeigt ist. Zusätzlich umfasst das Untersetzungsgetriebe eine Kurvenscheibe 6. Die Kurvenscheibe umfasst einen Kurvenzug 7, welcher der in Fig. 2 gefundenen Bahn 8 entspricht. Aufgrund des ganzzahligen Verhältnisses m = R/r = 72/24 = 3/1 handelt es sich um eine geschlossene verkürzte Hypotrochoide mit drei Bögen. Die grundsätzliche Anordnung von Hohlrad 2, Sonnenrad 11 und Planetenrad 3 entspricht, wie bereits zuvor erwähnt, der Anordnung aus den Fig. 1 und 2. Jedoch wurde ein anderes Verhältnis m = R/r gewählt. Im gezeigten Fall beträgt das Verhältnis m = R/r 73/25. Die Zähnezahl von Hohlrad und Planetenrad wurde daher jeweils um einen Zahn erhöht. Dies führt dazu, dass der Punkt 5 auf dem Planetenrad 3 nicht mehr die in Fig. 2 gezeigte geschlossene verkürzte Hypozykloide mit drei Bögen beschreibt, sondern die sich selbst überlagernde verkürzte Hypozykloide 8. Erfindungsgemäß besteht zwischen dem Punkt 5 auf dem Planetenrad und dem Kurvenzug 7 der Kurvenscheibe 6 eine Führung. Da die Kurvenscheibe 6 konzentrisch zu Hohlrad und Sonnrad drehbar gelagert ist, bewirkt diese Führung, dass die Kurvenscheibe 6 in Drehung versetzt wird. Das Untersetzungsverhältnis zwischen einem nicht dargestellten Planetenträger als Antrieb und der Kurvenscheibe 6 als Abtrieb des Getriebes berechnet sich über das Verhältnis $m_7/m_8$ mit:

$$m_7 = 72/24 \text{ und}$$

$$m_8 = 73/25.$$

Sofern der Planetenträger nicht direkt angetrieben wird sondern, wie im dargestellten Fall, über ein Sonnenrad, so ergibt sich eine nochmals höhere Untersetzung.

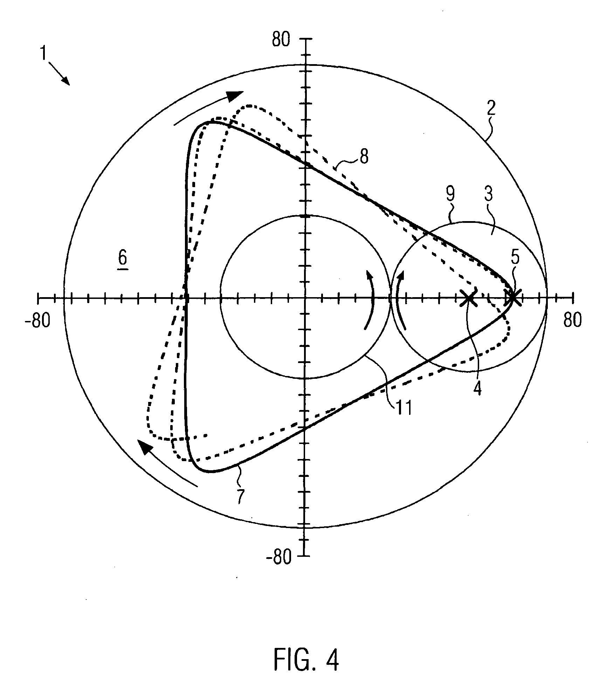

Figur 4 zeigt das Schema eines ähnlichen Untersetzungsgetriebes. Hier wurde ein Verhältnis $m_8 = 71/23$ gewählt. Das Verhältnis $m_7$, über welches der Kurvenzug 7 der Kurvenscheibe erzeugt wurde, liegt unverändert bei 72/24. Während bei dem Untersetzungsgetriebe aus Figur 3 das Sonnenrad 11 und die Kurvenscheibe 6 die gleiche Drehrichtung aufweisen, erfolgt bei dem Untersetzungsgetriebe aus Figur 4 eine Drehrichtungsumkehr.

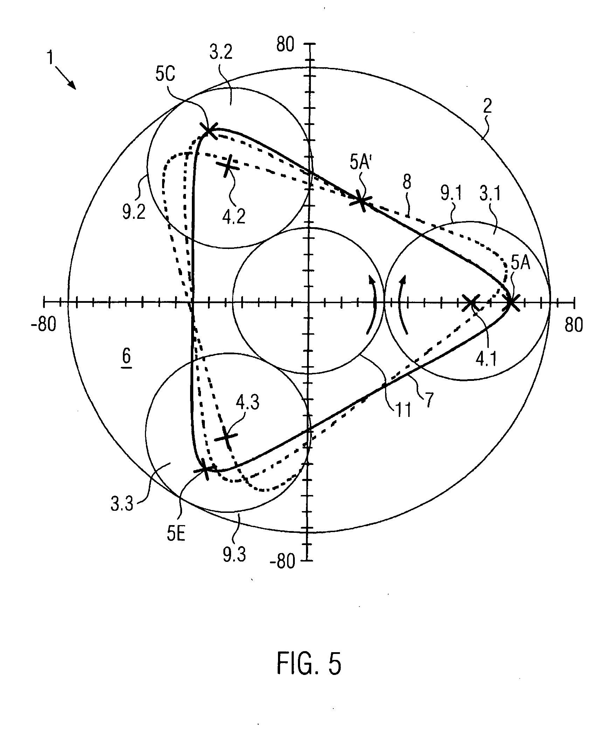

Figur 5 zeigt das Untersetzungsgetriebe aus Figur 3 mit zwei zusätzlichen Planetenrädern 3.2 und 3.3. Die drei Planetenräder 3.1, 3.2 und 3.3 sind gleichmäßig über den Umfang des Untersetzungsgetriebes verteilt angeordnet. Jedes Planetenrad verfügt über ein punktförmiges Führungselement 5A, 5C, bzw. 5E. Bei diesem Untersetzungsgetriebe besteht zwischen dem Kurvenzug 7 der Kurvenscheibe 6 und jedem der drei Führungselemente 5A, 5C, 5E eine Führung. Gegenüber dem Untersetzungsgetriebe aus Figur 3 gewährleistet diese Ausführungsform einen ruhigeren Lauf. Die Kurvenscheibe 6 kann beispielsweise derart gestaltet sein, dass der Kurvenzug 7 eine mittlere Ausnehmung der Kurvenscheibe begrenzt. In diesem Fall können als Führungselemente drehbar an den Planetenrädern gelagerte Bolzen verwendet werden, die entlang des Kurvenzugs 7 der Kurvenscheibe 6 abwälzen. Bei dem Untersetzungsgetriebe aus Figur 5 besteht allerdings das Problem, dass die Bewegung der drei Bolzen nicht in jeder Stellung zu einem Vortrieb der Kurvenscheibe 6 führt. Betrachtet man beispielsweise die Bahn des Punktes 5A auf dem ersten Planetenrad 3.1 ausgehend vom Ausgangszustand, so erzeugt dieser Punkt so lange einen Vortrieb der Kurvenscheibe 6, bis er die Position 5A' erreicht. Ab dieser Position entfernt sich der Punkt 5A vom Kurvenzug 7 der Kurvenscheibe 6. Um diesem Problem entgegenzuwirken, wäre es rein theoretisch denkbar, beispielsweise auf der gegenüberliegenden Seite der Planetenräder eine zweite Kurvenscheibe zu verwenden, die gegenüber der ersten Kurvenscheibe um 180° versetzt ist und mit entsprechenden zusätzlichen Bolzen auf der gegenüberliegenden Seite der Planetenräder in Eingriff steht. Die beiden gegeneinander versetzten Kurvenscheiben müssen miteinander verbunden werden. Da diese Lösung technisch nicht umsetzbar ist, ohne das Hohlrad innerhalb des durch die beiden Kurvenscheiben gebildeten Abtriebs einzukapseln, verbleibt für das Untersetzungsgetriebe aus Figur 5 lediglich die Lösung, den Kurvenzug 7 als Nut auszuführen.

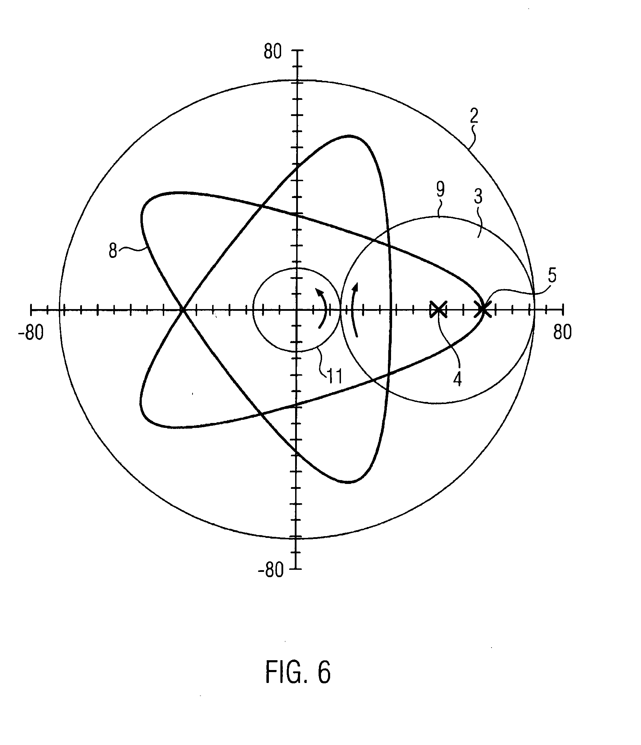

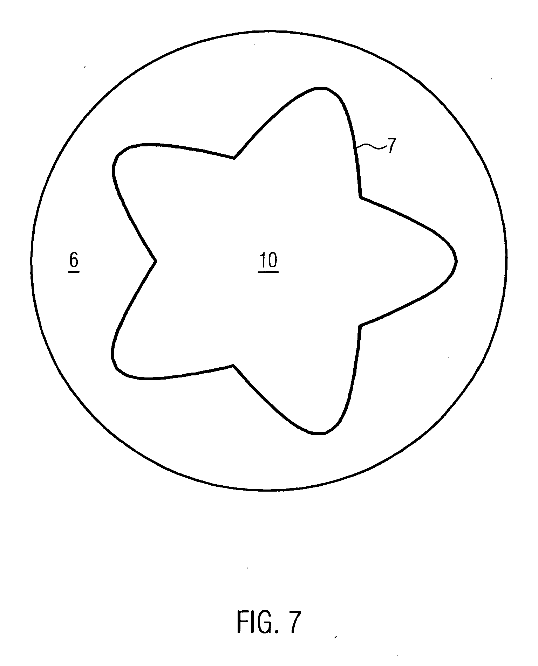

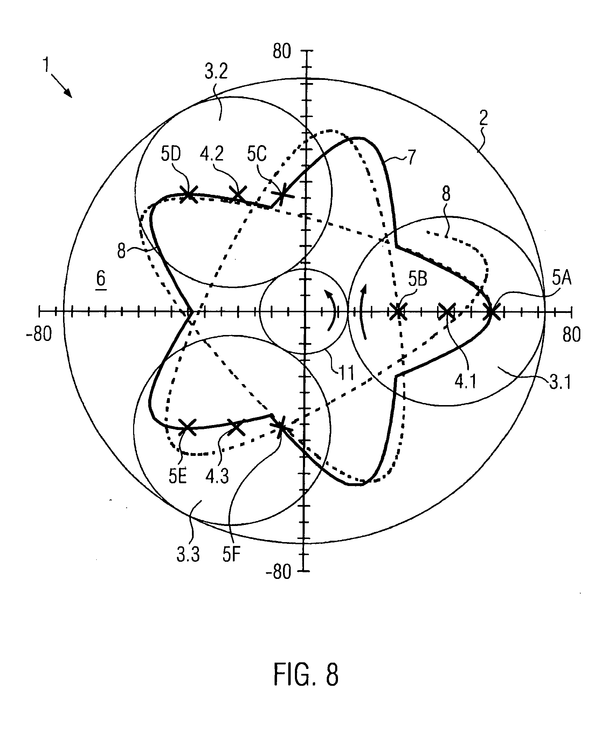

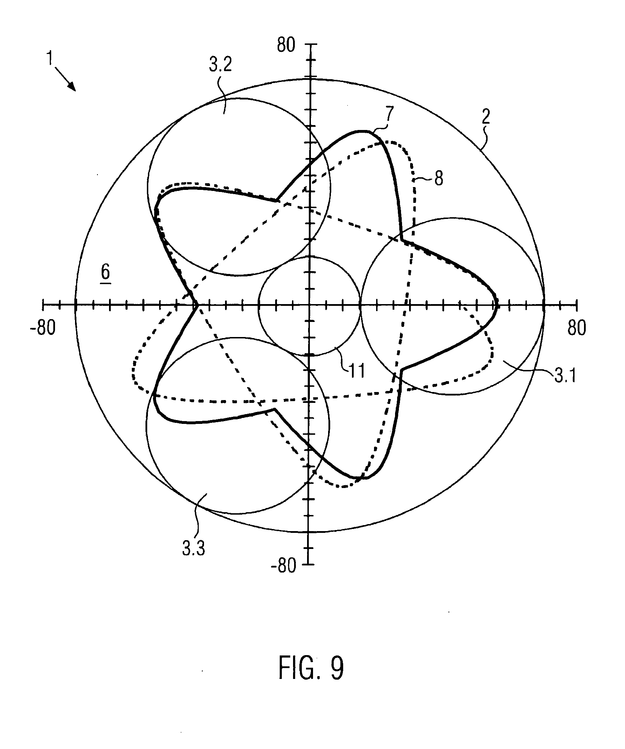

Figur 6 zeigt eine Anordnung ähnlich den Anordnungen aus den Figuren 1 und 2, zur Erzeugung einer sich selbst überlagernden, geschlossenen verkürzten Hypozykloide 8. Das Verhältnis $m = R/r$ beträgt in diesem Fall 70/28. Figur 7 zeigt eine Kurvenscheibe 6, deren Kurvenzug 7 durch die Hüllkurve der in Figur 6 gezeigten Hypozykloide 8 gebildet wird. Bei der in Figur 7 gezeigten Kurvenscheibe 6 begrenzt der Kurvenzug 7 eine mittlere Ausnehmung 10 der Kurvenscheibe. Die Kurvenscheibe findet bei dem in Figur 8 gezeigten Untersetzungsgetriebe 1 Anwendung. Die Zähnezahl von Hohlrad und Planetenrad ist bei diesem Untersetzungsgetriebe gegenüber der Vorrichtung aus Figur 6 jeweils um einen Zahn erhöht. Das Verhältnis $m = R/r$ beträgt demnach 71/29. Ähnlich wie das Untersetzungsgetriebe aus Figur 5, verfügt auch das Untersetzungsgetriebe aus Figur 8 über drei Planetenräder, die gleichmäßig über den Umfang des Untersetzungsgetriebes verteilt angeordnet sind. An jedem Planetenrad sind jeweils zwei Bolzen drehbar gelagert. Die beiden Bolzen sind jeweils im gleichen Abstand zur Planetenradachse angeordnet und gegenüber der Planetenradachse um 180° zueinander versetzt. Die beiden Bolzen liegen somit einander gegenüber. Das erste Planetenrad 3.1 verfügt über die beiden Drehbolzen 5A und 5B, das zweite Planetenrad 3.2 über die beiden Bolzen 5C und 5D und das dritte Planetenrad 3.3 über die beiden Bolzen 5E und 5F. Die Hypozykloide 8 beschreibt die Bahn des ersten Bolzens 5A auf dem ersten Planetenrad 3.1. Es ist deutlich zu erkennen, dass der Bolzen 5A nicht fortlaufend entlang des Kurvenzugs 7 der Kurvenscheibe 6 abwälzt. Allerdings besteht zu jeder Zeit zwischen zumindest einem der Bolzen 5A bis 5F und dem Kurvenzug 7 der Kurvenscheibe 6 ein mitnehmender Eingriff, so dass die Kurvenscheibe 6 kontinuierlich in Drehung versetzt wird. Die Drehachsen der Bolzen 5A bis 5F verlaufen parallel zu der jeweiligen Planetenradachse. Die Bolzen 5A bis 5F werden vorzugsweise aus einer Keramik gefertigt und sind mittels eines Wälzlagers, insbesondere mittels eines Nadellagers, drehbar in dem jeweiligen Planetenrad gelagert. Bei dem Untersetzungsgetriebe aus Figur 8 weisen das Sonnenrad 11 und die Kurvenscheibe 6 die gleiche Drehrichtung auf. Das Untersetzungsgetriebe aus Figur 9 hingegen bewirkt eine Drehrichtungsumkehr. Dieses Getriebe verfügt über die gleiche Kurvenscheibe wie das Getriebe aus Figur 8. Das Verhältnis $m = R/r$ beträgt 69/27 anstatt 71/29.

**Patentansprüche**

1. Untersetzungsgetriebe (1) mit einem Hohlrad (2), zumindest einem in dem Hohlrad (2) abrollenden Planetenrad (3;

3.1, 3.2, 3.3) mit einer Planetenradachse (4; 4.1, 4.2, 4.3), und einem koaxial zum Hohlrad (2) drehbar gelagerten Abtrieb, wobei das Planetenrad (3; 3.1, 3.2, 3.3) ein von der Planetenradachse (4; 4.1, 4.2, 4.3) beabstandetes Führungselement (5; 5A, 5B, 5C, 5D, 5E, 5F) umfasst, das beim Abrollen des Planetenrads (3; 3.1, 3.2, 3.3) gegenüber dem Hohlrad (2) eine Hypozykloide beschreibt, wobei zwischen dem Führungselement (5; 5A, 5B, 5C, 5D, 5E, 5F) und einer Kurvenscheibe (6) des Abtriebs eine Führung besteht, so dass der Abtrieb durch das Abrollen des Planetenrads (3; 3.1, 3.2, 3.3) eine Antriebsbewegung erfährt, **dadurch gekennzeichnet, dass** die Kurvenscheibe (6) einen Kurvenzug (7) zur Führung des Führungselements (5; 5A, 5B, 5C, 5D, 5E, 5F) aufweist, wobei der Kurvenzug (7) eine geschlossene Hypozykloide oder die Hüllkurve einer geschlossenen Hypozykloide ist, welche durch die Bewegung des Führungselements (5; 5A, 5B, 5C, 5D, 5E, 5F) bei einem anderen als dem tatsächlichen Verhältnis des wirksamen Radius R des Hohlrads (2) zum wirksamen Radius r des Planetenrads (3; 3.1, 3.2, 3.3) beschrieben wird.

2. Untersetzungsgetriebe (1) nach Anspruch 1, **dadurch gekennzeichnet, dass** der Kurvenzug (7) der Kurvenscheibe (6) periodisch von dem gemäß Anspruch 1 definierten Kurvenzug (7) abweicht.

3. Untersetzungsgetriebe (1) nach einem der Ansprüche 1 bis 2, **dadurch gekennzeichnet, dass** das Führungselement (5; 5A, 5B, 5C, 5D, 5E, 5F) zwischen der Planetenradachse (4; 4.1, 4.2, 4.3) und dem Rollkreis (9; 9.1, 9.2, 9.3) des Planetenrads (3; 3.1, 3.2, 3.3) angeordnet ist.

4. Untersetzungsgetriebe (1) nach einem der Ansprüche 1 bis 3, **dadurch gekennzeichnet, dass** das Führungselement (5; 5A, 5B, 5C, 5D, 5E, 5F) ein Bolzen ist, der parallel zur Planetenradachse (4; 4.1, 4.2, 4.3) ausgerichtet ist und eine Führung entlang des Kurvenzugs (7) der Kurvenscheibe (6) erfährt.

5. Untersetzungsgetriebe (1) nach Anspruch 4, **dadurch gekennzeichnet, dass** der Bolzen drehbar an dem Planetenrad (3; 3.1, 3.2, 3.3) gelagert ist und entlang des Kurvenzugs (7) der Kurvenscheibe (6) abwälzt.

6. Untersetzungsgetriebe (1) nach Anspruch 5, **dadurch gekennzeichnet, dass** der Bolzen aus Keramik oder aus Hartmetall gefertigt ist.

7. Untersetzungsgetriebe (1) nach Anspruch 6, **dadurch gekennzeichnet, dass** der Bolzen aus Zirkoniumoxid gefertigt ist.

8. Untersetzungsgetriebe (1) nach einem der Ansprüche 1 bis 7, **dadurch gekennzeichnet, dass** das Untersetzungsgetriebe (1) genau drei Planetenräder (3.1, 3.2, 3.3) umfasst.

9. Untersetzungsgetriebe (1) nach einem der Ansprüche 1 bis 8, **dadurch gekennzeichnet, dass** jedes Planetenrad (3; 3.1, 3.2, 3.3) jeweils zwei Führungselemente (5; 5A, 5B, 5C, 5D, 5E, 5F) umfasst, die bezüglich der Planetenradachse (4; 4.1, 4.2, 4.3) um 180° versetzt zueinander im gleichen Abstand c von der Planetenradachse (4; 4.1, 4.2, 4.3) angeordnet sind.

10. Untersetzungsgetriebe (1) nach einem der Ansprüche 1 bis 9, **dadurch gekennzeichnet, dass** der Kurvenzug (7) der Kurvenscheibe (6) eine mittlere Ausnehmung (10) der Kurvenscheibe (6) begrenzt.

11. Untersetzungsgetriebe (1) nach einem der Ansprüche 1 bis 9, **dadurch gekennzeichnet, dass** der Kurvenzug (7) durch eine Nut in der Kurvenscheibe (6) gebildet ist.

12. Untersetzungsgetriebe (1) nach einem der Ansprüche 1 bis 11, **dadurch gekennzeichnet, dass** das Untersetzungsgetriebe (1) ferner ein mit dem Planetenrad (3; 3.1, 3.2, 3.3) kämmendes Sonnenrad (11) umfasst, das zum Antrieb des Planetenrads (3; 3.1, 3.2, 3.3) dient, wobei das Planetenrad (3; 3.1, 3.2, 3.3) schwimmend zwischen Sonnenrad (11) und Hohlrad (2) gelagert ist.

13. Untersetzungsgetriebe (1) nach einem der Ansprüche 1 bis 11, **dadurch gekennzeichnet, dass** der Antrieb des Planetenrads (3; 3.1, 3.2, 3.3) über einen Planetenträger erfolgt, der koaxial zum Hohlrad (2) drehbar gelagert ist.

14. Untersetzungsgetriebe (1) nach einem der Ansprüche 1 bis 13, **dadurch gekennzeichnet, dass** das Untersetzungsverhältnis im Bereich zwischen 5:1 und 500:1 liegt.

**Claims**

1. Reduction gearing (1) with a ring gear (2), at least one planet gear (3; 3.1, 3.2, 3.3) rolling around in said ring gear (2) with a planet gear axis (4; 4.1, 4.2, 4.3), and an output rotatably mounted coaxially to said ring gear (2), where said planet gear (3; 3.1, 3.2, 3.3) comprises a guide member (5; 5A, 5B, 5C, 5D, 5E, 5F) that is spaced apart from said planet gear axis (4; 4.1, 4.2, 4.3) and describes a hypocycloid relative to said ring gear (2) when said planet gear (3; 3.1, 3.2, 3.3) rolls around, wherein guidance is provided between said guide member (5; 5A, 5B, 5C, 5D, 5E, 5F) and a cam disk (6) of said output such that said output experiences a drive motion by said planet gear (3; 3.1, 3.2, 3.3) rolling around, **characterized in that** said cam disk (6) comprises a cam contour (7) for guiding said guide member (5; 5A, 5B, 5C, 5D, 5E, 5F), wherein said cam contour (7) is a closed hypocycloid or the envelope of a closed hypocycloid that is described by the motion of said guide member (5; 5A, 5B, 5C, 5D, 5E, 5F) at a ratio other than the actual ratio of the effective radius R of said ring gear (2) to the effective radius r of said planet gear (3; 3.1, 3.2, 3.3).

2. Reduction gearing (1) according to claim 1, **characterized in that** said cam contour (7) of said cam disk (6) deviates periodically from said cam contour (7) described according to claim 1.

3. Reduction gearing (1) according to one of the claims 1 to 2, **characterized in that** said guide member (5; 5A, 5B, 5C, 5D, 5E, 5F) is arranged between said planet gear axis (4; 4.1, 4.2, 4.3) and the pitch circle (9; 9.1, 9.2, 9.3) of said planet gear (3; 3.1, 3.2, 3.3).

4. Reduction gearing (1) according to one of the claims 1 to 3, **characterized in that** said guide member (5; 5A, 5B, 5C, 5D, 5E, 5F) is a pin that is aligned parallel to said planet gear axis (4; 4.1, 4.2, 4.3) and is guided along said cam contour (7) of said cam disk (6).

5. Reduction gearing (1) according to claim 4, **characterized in that** said pin is rotatably mounted at said planet gear (3; 3.1, 3.2, 3.3) and rolls around along said cam contour (7) of said cam disk (6).

6. Reduction gearing (1) according to claim 5, **characterized in that** said pin is manufactured from ceramic or hard metal.

7. Reduction gearing (1) according to claim 6, **characterized in that** said pin is manufactured from zirconium oxide.

8. Reduction gearing (1) according to one of the claims 1 to 7, **characterized in that** said reduction gearing (1) comprises exactly three planet gears (3.1, 3.2, 3.3).

9. Reduction gearing (1) according to one of the claims 1 to 8, **characterized in that** each planet gear (3; 3.1, 3.2, 3.3) respectively comprises two guide members (5; 5A, 5B, 5C, 5D, 5E, 5F) that are arranged at the same distance c from said planet gear axis (4; 4.1, 4.2, 4.3) offset from each other by 180° relative to said planet gear axis (4; 4.1, 4.2, 4.3).

10. Reduction gearing (1) according to one of the claims 1 to 9, **characterized in that** said cam contour (7) of said cam disk (6) defines a central recess (10) of said cam disk (6).

11. Reduction gearing (1) according to one of the claims 1 to 9, **characterized in that** said cam contour (7) is formed by a groove in said cam disk (6).

12. Reduction gearing (1) according to one of the claims 1 to 11, **characterized in that** said reduction gearing (1) further comprises a sun gear (11) meshing with said planet gear (3; 3.1, 3.2, 3.3) and serving to drive said planet gear (3; 3.1, 3.2, 3.3), wherein said planet gear (3; 3.1, 3.2, 3.3) is supported floatingly between said sun gear (11) and said ring gear (2).

13. Reduction gearing (1) according to one of the claims 1 to 11, **characterized in that** driving said planet gear (3; 3.1, 3.2, 3.3) is effected via a planet carrier being rotatably supported coaxially to said ring gear (2).

14. Reduction gearing (1) according to one of the claims 1 to 13, **characterized in that** the reduction ratio is in the range between 5:1 and 500:1.

**Revendications**

1. Démultiplicateur (1) comprenant une couronne (2), au moins un satellite (3; 3.1, 3.2, 3.3) qui roule dans la couronne (2) et présente un axe de satellite (4; 4.1, 4.2, 4.3), et une sortie d'entraînement montée rotative coaxialement à la couronne (2), le satellite (3; 3.1, 3.2, 3.3) comportant un élément de guidage (5; 5A, 5B, 5C, 5D, 5E, 5F), qui est distant de l'axe de satellite (4; 4.1, 4.2, 4.3) et décrit une hypocycloïde lors du roulement du satellite (3; 3.1, 3.2, 3.3) par rapport à la couronne (2), et un guidage existant entre l'élément de guidage (5; 5A, 5B, 5C, 5D, 5E, 5F) et un disque de came (6) de la sortie d'entraînement, de sorte qu'un mouvement d'entraînement est conféré à la sortie d'entraînement en réponse au roulement du satellite (3; 3.1, 3.2, 3.3), **caractérisé en ce que** le disque de came (6) présente un chemin de came (7) pour guider l'élément de guidage (5; 5A, 5B, 5C, 5D, 5E, 5F), le chemin de came (7) étant une hypocycloïde fermée ou la courbe enveloppe d'une hypocycloïde fermée, qui est décrite par le mouvement de l'élément de guidage (5; 5A, 5B, 5C, 5D, 5E, 5F) pour un autre rapport que celui effectif du rayon actif R de la couronne (2) au rayon actif r du satellite (3; 3.1, 3.2, 3.3).

2. Démultiplicateur (1) selon la revendication 1, **caractérisé en ce que** le chemin de came (7) du disque de came (6) s'écarte périodiquement du chemin de came (7) défini conformément à la revendication 1.

3. Démultiplicateur (1) selon l'une des revendications 1 à 2, **caractérisé en ce que** l'élément de guidage (5; 5A, 5B, 5C, 5D, 5E, 5F) est agencé entre l'axe de satellite (4; 4.1, 4.2, 4.3) et le cercle de roulement (9; 9.1, 9.2, 9.3) du satellite (3; 3.1, 3.2, 3.3).

4. Démultiplicateur (1) selon l'une des revendications 1 à 3, **caractérisé en ce que** l'élément de guidage (5; 5A, 5B, 5C, 5D, 5E, 5F) est une broche, qui est orientée parallèlement à l'axe de satellite (4; 4.1, 4.2, 4.3) et à laquelle est conféré un guidage le long du chemin de came (7) du disque de came (6).

5. Démultiplicateur (1) selon la revendication 4, **caractérisé en ce que** la broche est montée rotative sur le satellite (3; 3.1, 3.2, 3.3) et roule le long du chemin de came (7) du disque de came (6).

6. Démultiplicateur (1) selon la revendication 5, **caractérisé en ce que** la broche est fabriquée en céramique ou en métal dur.

7. Démultiplicateur (1) selon la revendication 6, **caractérisé en ce que** la broche est fabriquée en oxyde de zirconium.

8. Démultiplicateur (1) selon l'une des revendications 1 à 7, **caractérisé en ce que** le démultiplicateur (1) comprend exactement trois satellites (3.1, 3.2, 3.3).

9. Démultiplicateur (1) selon l'une des revendications 1 à 8, **caractérisé en ce que** chaque satellite (3; 3.1, 3.2, 3.3) comprend respectivement deux éléments de guidage (5; 5A, 5B, 5C, 5D, 5E, 5F), qui sont agencés, par rapport à l'axe de satellite (4; 4.1, 4.2, 4.3), de manière mutuellement décalée de 180°, à une même distance c de l'axe de satellite (4; 4.1, 4.2, 4.3).

10. Démultiplicateur (1) selon l'une des revendications 1 à 9, **caractérisé en ce que** le chemin de came (7) du disque de came (6) délimite un évidement central (10) du disque de came (6).

11. Démultiplicateur (1) selon l'une des revendications 1 à 9, **caractérisé en ce que** le chemin de came (7) est formé par une rainure dans le disque de came (6).

12. Démultiplicateur (1) selon l'une des revendications 1 à 11, **caractérisé en ce que** le démultiplicateur (1) comprend, par ailleurs, une roue centrale (11) engrenant avec le satellite (3; 3.1, 3.2, 3.3), qui sert à l'entraînement du satellite (3; 3.1, 3.2, 3.3), le satellite (3; 3.1, 3.2, 3.3) étant monté flottant entre la roue centrale (11) et la couronne (2).

13. Démultiplicateur (1) selon l'une des revendications 1 à 11, **caractérisé en ce que** l'entraînement du satellite (3; 3.1, 3.2, 3.3) s'effectue par l'intermédiaire d'un porte-satellite, qui est monté rotatif coaxialement à la couronne (2).

14. Démultiplicateur (1) selon l'une des revendications 1 à 13, **caractérisé en ce que** le rapport de démultiplication se situe dans une plage entre 5:1 et 500:1.

FIG. 1

FIG. 2

FIG. 3

FIG. 4

FIG. 5

FIG. 6

FIG. 7

FIG. 8

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008061672 A1
- DE 102004048197 A1
- DE 102010012879 A1
- WO 02090149 A1